# EUROPEAN PATENT APPLICATION

(11) **EP 2 221 241 A1**
(43) Date of publication of application: **25.08.2010**
(21) Application number: 10150720.0
(22) Date of filing: 14.01.2010
(51) Int. Cl.: B62J 6/00, B62J 6/16

(54) **Position finding device for bicycle**

(30) Priority: 13.02.2009 TW 98202094 U
(71) Applicant: Direction Technology Co., Ltd., Taipei Hsian (TW)
(72) Inventor: Chen, Yi-Lun, 110, Taipei City (TW)
(74) Representative: Schlief, Thomas P.

(57) **Abstract**

A position finding device (100, 100a, 100b, 100c) for a bicycle includes an operatable position finder unit (1, 1 a, 1 b), a key (5) and at least one indicator unit (2a, 2b, 2c, 2d). The operatable position finder unit (1, 1a, 1 b) comprises a body (11, 11 a, 11 b), at least one operatable button (12) and a transmitter (13). The operatable button (12) is arranged on the body (11, 11 a, 11 b) to generate a positioning signal under the operation of a user.

The transmitter (13) is arranged in the body (11, 11 a, 11b) and is connected to the operatable button (12) to transmit the positioning signal generated by the operatable button (12). The key may be incorporated with the body (11, 11 a, 11 b) of the operatable position finder unit in a fixed, folded or other form. The indicator units (2a, 2b, 2c, 2d) are mounted at selected locations on a bicycle, and perform corresponding operations after a receiver (21 a, 21 b, 21 c, 21 d, 21) receives the positioning signal transmitted by the transmitter (13).

## Description

### FIELD OF THE INVENTION

This invention relates to a position finding device, and particularly to a position finding device with an operatable position finder unit (1, 1a, 1b) and at least one indicator unit for a bicycle.

### BACKGROUND OF THE INVENTION

With the increasing fuel price, more and more people prefer riding a bicycle or electric bicycle than taking public transportation. A bicycle can be used as a means for transportation, and also be used as an exercise apparatus during spare time. Electric bicycle is provided with power for driving the electric bicycle to run.

However, in structural design, bicycles or electrical bicycles are different from automobiles or motorcycles, and are not provided with positioning function. When a user parks his bicycle or electrical bicycle at a station, a park or other public area where a number of bicycles are parked, it is not easy for the user to locate his bicycle and the user has to spend a considerable amount of time to locate his bicycle, making it relatively inconvenient for the user.

Therefore, there is a need for installing a positioning device on a bicycle or electrical bicycle in order to make it easier for locating a bicycle or electrical bicycle while reducing the time spent on locating the bicycle.

Moreover, some users may also install an electronic lock to his bicycle, and a key is used for locking or unlocking the electronic lock. For an electric bicycle, it is provided with a key for starting the electric bicycle. Accordingly, the user has to carry a key for locking or unlocking the electronic lock or a key for starting the electric bicycle and also a remote controller for positioning the bicycle or electric bicycle, and it is not convenient for the user.

Therefore, it is necessary to develop a key of an electronic lock for a bicycle or a key for starting an electric bicycle integrated with an operatable position finder unit or a remote controller of the operatable position finder unit.

### SUMMARY OF THE INVENTION

An object of the present invention is to provide a position finding device for bicycles that is convenient to carry and use for the user.

Another object of the present invention is to provide a position finding device, in which a manually-operatable position finder unit is incorporated with a key to an electronic lock of a bicycle or a key to an electrical bicycle, making locating a bicycle fast and convenient for a user.

To achieve the above objects, the present invention provides a position finding device for a bicycle which includes an operatable position finder unit, a key and at least one indicator unit. The operatable position finder unit comprises a body, at least one operatable button and a transmitter. The operatable button is arranged on the body to generate a positioning signal under the operation of a user. The transmitter is arranged in the body and is connected to the operatable button to transmit the positioning signal generated by the operatable button. The key for locking or unlocking an electronic lock or for starting or stopping an electric bicycle may be incorporated with the body of the operatable position finder unit. The indicator units are mounted at selected locations on a bicycle, and perform corresponding operations after receiving the positioning signal transmitted by the transmitter.

In a preferred embodiment of the present invention, a foldable structure is provided for the operatable position finder unit. When the user needs to use the key, the user unfolds the key from the body of the operatable position finder unit. When the key is not used, the user folds the key into the body of the operatable position finder unit.

The incorporation of the operatable position finder unit with the key to form an integrated structure makes it compact for carrying.

Moreover, the integrated structure makes it easy for use. After using the operatable position finder unit to locate his bicycle or electrical bicycle, the user can immediately use the key to unlock the electronic lock of the bicycle, thereby overcoming the problem that the user needs to carry a separate operatable position finder unit and a key at the same time, and also making the use of the operatable position finder unit or key more convenient for the user.

Furthermore, a positioning signal is transmitted when the user operates an operatable button on the operatable position finder unit and causes the indicator units to perform corresponding operation, thereby facilitating the user in reducing the time spent on locating their bicycle.

### BRIEF DESCRIPTION OF THE DRAWINGS

- **Fig. 1**: is a circuit diagram according to a first embodiment of a position finding device of the present invention;
- **Fig. 2**: is a schematic view of an operation of locating a bicycle or electrical bicycle;
- **Fig. 3**: is a schematic view showing that an operatable position finder unit is incorporated with a key according to a second embodiment of the operatable position finder unit;
- **Fig. 4**: is a schematic view showing that an operatable position finder unit is incorporated with a foldable key according to a third embodiment of the operatable position finder unit;
- **Fig. 5**: is a schematic view of the foldable key of Fig. 4, showing that the key is folded into a body of the operatable position finder unit; and
- **Fig. 6**: is a circuit diagram according to a second embodiment of the position finding device of the present invention.

### DETAILED DESCRIPTION OF THE PREFERRED EMBODIMENTS

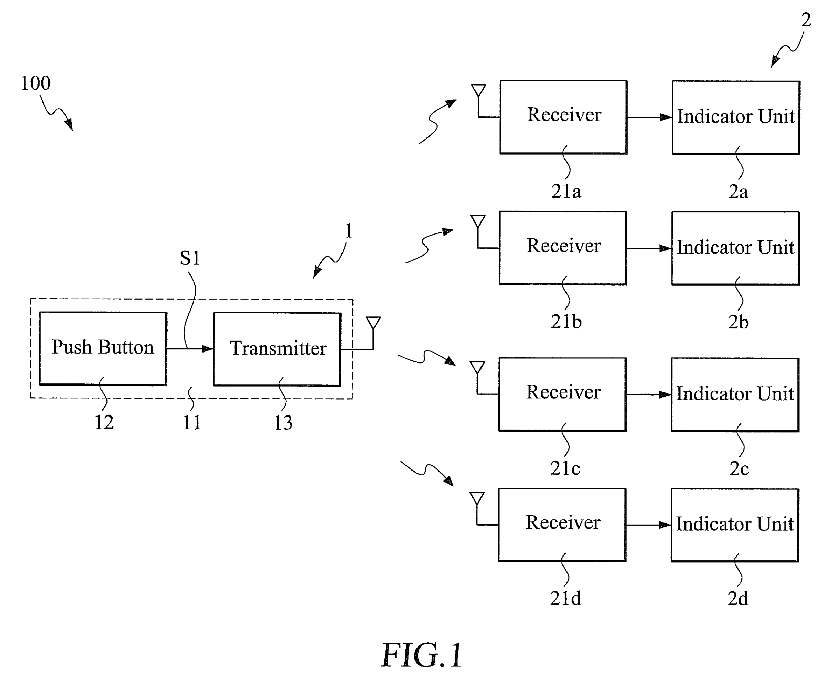

Referring to Fig. 1 which is a circuit diagram according to a first embodiment of a position finding device of the present invention, the position finding device 100 of the present invention comprises an operatable position finder unit 1 and four indicator units 2a, 2b, 2c, 2d, wherein the indicator unit 2a is a headlight, the indicator unit 2b is a taillight, the indicator unit 2c is an electronic lock, and the indicator unit 2d is an alarm. The operatable position finder unit 1 is in a form of hand-held and manually operatable unit.

The operatable position finder unit 1 comprises a body 11, a button 12 and a transmitter 13. The button 12 is arranged on the body 11 of the operatable position finder unit 1, which is used to generate a positioning signal S1 when the operatable button 12 is pressed. The transmitter 13 is arranged in the body 11 of the operatable position finder unit 1 and electrically connected to the operatable button 12 to wirelessly transmit the positioning signal S1 generated when the operatable button 12 is pressed.

The indicator units 2a, 2b, 2c, and 2d are respectively connected to receivers 21 a, 21 b, 21 c, and 21 d. After the receivers 21 a, 21 b, 21 c, and 21 d receive the positioning signal S1 transmitted by the transmitter 13 of the operatable position finder unit 1, the indicator units 2a, 2b, 2c, and 2d perform corresponding operations.

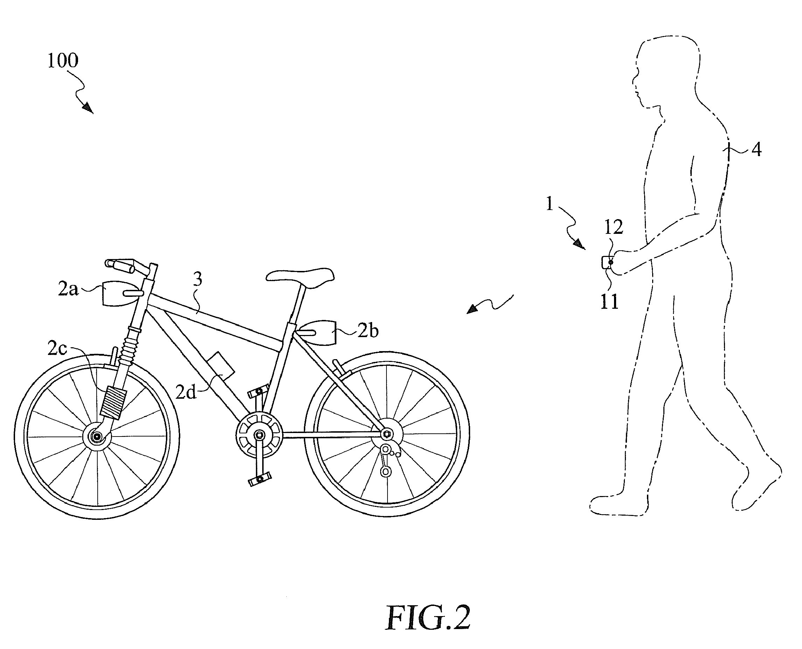

Referring also to Fig. 2, the indicator units 2a, 2b, 2c, and 2d are respectively mounted at selected locations on the bicycle 3 to perform corresponding operations after receiving the positioning signal S1.

When a user 4 wants to locate the bicycle 3, the user 4 holds the operatable position finder unit 1 and presses the operatable button 12 on the body 11 of the operatable position finder unit 1. The pressed operatable button 12 generates the locating signal S1, and then the positioning signal S1 is transmitted by the transmitter 13 of the operatable position finder unit 1.

After the receivers 21 a and 21 b of the indicator units 2a and 2b on the bicycle 3 receive the positioning signal S1, the indicator units 2a and 2b of the bicycle 3 are activated and emit light. For example, after receiving the positioning signal S1, the indicator unit 2a on the bicycle 3 is activated and flashes. In the meantime, after receiving the positioning signal S1 transmitted by the transmitter 13 of the operatable position finder unit 1, the indicator unit 2b on the bicycle 3 also emits light, such as, flashing or staying lit for a predetermined period of time. When the receiver 21 c of the indicator unit 2c on the bicycle 3 receives the positioning signal S1, it activates the indicator unit 2c to unlock the bicycle 3. Furthermore, the receiver 21 d of the indicator unit 2d also receives the positioning signal S1 and then activates the indicator unit 2d to generate a beeping sound.

After the user 4 presses the operatable button 12, the operatable position finder unit 1 transmits a positioning signal S1 to activate the indicator units 2a and 2b on the bicycle 3 to flash or light and the indicator unit 2d to generate a beeping sound, thereby facilitating the user 4 in identifying the position of the bicycle 3. It overcomes the problems and inconveniences in the prior art of spending a considerable amount of time in locating the bicycle 3.

Although the present embodiment has four indicator units 2a, 2b, 2c, and 2d mounted on the bicycle 3, the user 4 may also increase or decrease the number of indicator units optionally to receive the positioning signal S1 and perform corresponding operations.

Furthermore, in the present embodiment, the operatable position finder unit 1 is a separate operatable position finder unit. The user 4 may also incorporate the operatable position finder unit 1 with a keychain to be worn by the user 4 in a selected position.

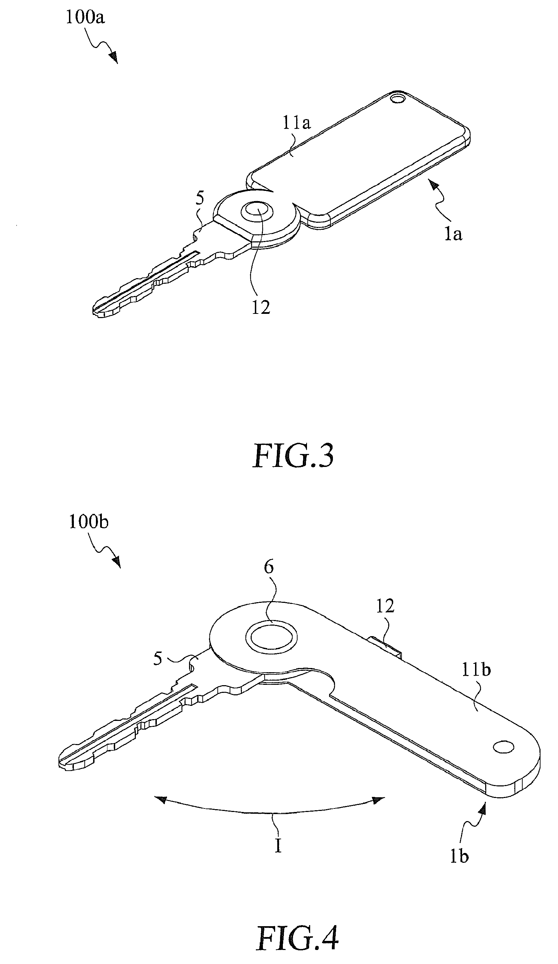

Please refer to Fig. 3, which shows that an operatable position finder unit is incorporated with a key according to a second embodiment of the operatable position finder unit. The components and operation principle of the position finding device 100a of the present embodiment is essentially the same as the first embodiment. Therefore, there is no more detailed description. The difference between the two embodiments is that the operatable position finder unit 1 a of the present embodiment is incorporated with a key 5. The key 5 is attached to the body 11 of the operatable position finder unit 1 a for opening a selected device or equipment. The key 5 may be the key to lock or unlock the indicator unit 2c of the first embodiment, and may also be the key to start or stop an electrical bicycle. The incorporation of the key 5 and the operatable position finder unit 1 a is convenient for the user 4 to carry and meets the need for a compact device when the user 4 rides the bicycle 3.

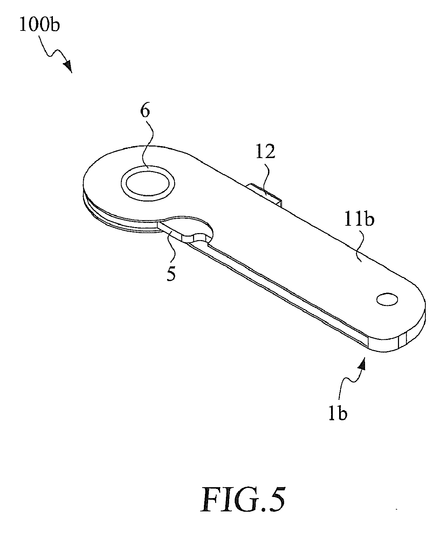

Referring to Figs. 4 and 5, Fig. 4 is a schematic view showing that an operatable position finder unit is incorporated with a foldable key according to a third embodiment of the operatable position finder unit, and Fig. 5 is a schematic view of the foldable key of Fig. 4, showing that the key is folded into a body of the operatable position finder unit. The components and operation principle of the position finding device 100b of the present embodiment is essentially the same as the second embodiment. Therefore, there is no more detailed description. The difference between the two embodiments is that the key 5 in the present embodiment is attached to a foldable structure 6 on the body 11b of the operatable position finder unit 1 b, enabling the key 5 and body 11 b to be folded.

When the key 5 is not used by the user 4, the user 4 can rotate the key 5 along a predetermined direction I to fold the key 5 into the body 11 b of the operatable position finder unit 1 b. When the user 4 needs to use the key 5, the user 4 can rotate the key 5 along the predetermined direction I to unfold the key 5 from the body 11b of the operatable position finder unit 1 b.

The foldable structure 6 is arranged in the body 11 b of the operatable position finder unit 1 b, enabling the key 5 attached to the operatable position finder unit 1 b to rotate along a predetermined direction I and fold in the body 11 b of the operatable position finder unit 1 b, or enabling the key 5 to be unfolded from the body 11 b of the operatable position finder unit 1 b. Therefore, it is much more convenient than that of the prior arts, as the volume of the operatable position finder unit is smaller after being folded.

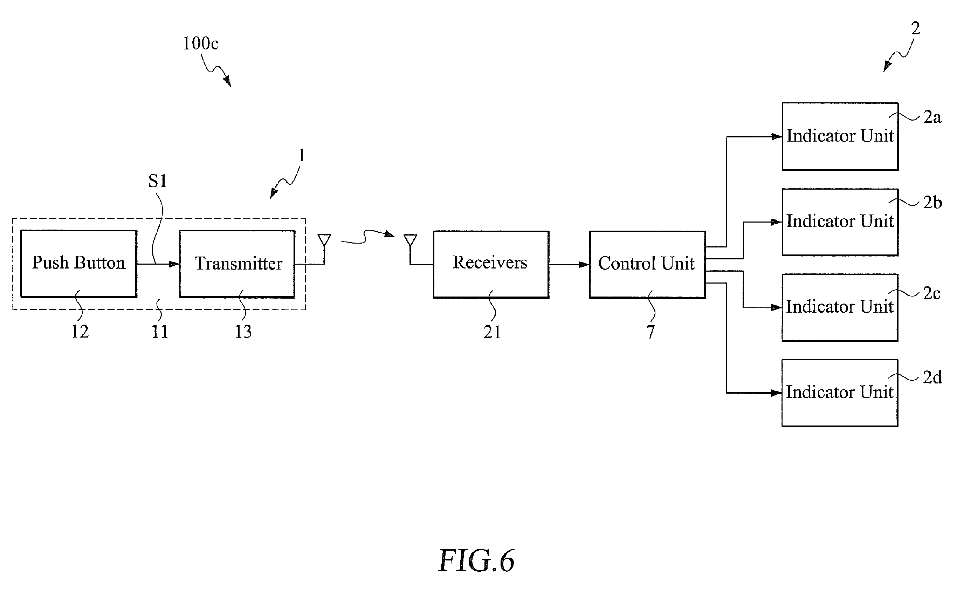

Fig. 6 is a circuit view illustrating the position finding device 100c constructed in according to a second embodiment of the present invention. In this embodiment, the circuit architecture is essentially the same as the first embodiment illustrated in Fig. 1, but the difference is that each indicator unit 2a, 2b, 2c, 2d is controlled by an integrated control unit 7, wherein the indicator unit 2a is a headlight, the indicator unit 2b is a taillight, the indicator unit 2c is an electronic lock, and the indicator unit 2d is an alarm. Each indicator unit 2a, 2b, 2c, 2d may be connected to the control unit 7 by conventional wires.

The control unit 7 is connected to a receiver 21. After the receiver 21 wirelessly receives the positioning signal S1 transmitted from the transmitter 13 of the operatable position finder unit 1, the control unit 7 controls one or more of the indicator units 2a, 2b, 2c, and 2d to perform corresponding operations. The control unit 7 may be designed with encoding/decoding function to encode or decode any wireless signals received.

## Claims

1. A position finding device (100, 100a, 100b, 100c) for a bicycle (3), comprising:
an operatable position finder unit (1, 1 a, 1 b), comprising:
a body (11, 11a, 11b);
at least one operatable button (12) arranged on the body (11, 11 a, 11b) to generate a positioning signal under the operation of a user;
a transmitter (13) arranged in the body (11, 11 a, 11 b) and electrically connected to the operatable button (12) to transmit the positioning signal; and
at least one indicator unit (2a, 2b, 2c, 2d) mounted at a selected location on a bicycle, wherein the indicator unit (2a, 2b, 2c, 2d) is connected to a receiver (21 a, 21 b, 21 c, 21 d, 21) to receive the positioning signal transmitted by the transmitter (13) of the operatable position finder unit (1, 1 a, 1 b), and enabling the indicator unit (2a, 2b, 2c, 2d) to perform a corresponding operation after receiving the positioning signal.

2. The position finding device (100, 100a, 100b, 100c) according to claim 1, wherein the indicator unit (2a) is a taillight.

3. The position finding device (100, 100a, 100b, 100c) according to claim 1, wherein the indicator unit (2b) is a headlight.

4. The position finding device (100, 100a, 100b, 100c) according to claim 1, wherein the indicator unit (2c) is an electronic lock.

5. The position finding device (100, 100a, 100b, 100c) according to claim 1, wherein the indicator unit (2d) is an alarm.

6. The position finding device (100a, 100b) according to claim 1, wherein the body (11 a, 11 b) of the operatable position finder unit (1 a, 1 b) is incorporated with a key.

7. The position finding device (100a) according to claim 6, wherein the key and the body (11a) have an integrated structure.

8. The position finding device (100b) according to claim 6, wherein the key comprises a foldable structure (6), enabling the key to be folded into the body (11 b).

9. The position finding device (100c) according to claim 1, further comprising a control unit (7) which is electrically connected to the indicator unit (2a, 2b, 2c, 2d) and the receiver (21), wherein after the receiver (21) receives the positioning signal, the control unit (7) controls the indicator unit (2a, 2b, 2c, 2d) to perform a corresponding operation.
